# EUROPEAN PATENT APPLICATION

(11) **EP 2 549 303 A1**
(43) Date of publication of application: **23.01.2013**
(21) Application number: 11756243.9
(22) Date of filing: 14.03.2011
(51) Int. Cl.: G02B 5/02, C09J 7/02, C09J 133/00, G02B 3/00

(54) **OPTICAL SHEET WITH ADHESIVE LAYER, METHOD FOR PRODUCING OPTICAL SHEET WITH ADHESIVE LAYER, LIGHT SOURCE USING OPTICAL SHEET WITH ADHESIVE LAYER, AND IMAGE DISPLAY DEVICE USING OPTICAL SHEET WITH ADHESIVE LAYER**

(30) Priority: 07.02.2011 JP 2011024182; 23.06.2010 JP 2010143009; 16.03.2010 JP 2010059599
(71) Applicant: Nitto Denko Corporation, Ibaraki-shi Osaka 567-8680 (JP)
(72) Inventor: MOROISHI,Yutaka, Ibaraki-shi Osaka 567-8680 (JP); HIGASHI,Masatsugu, Ibaraki-shi Osaka 567-8680 (JP); FUJITA,Shigeru, Ibaraki-shi Osaka 567-8680 (JP); NAKANO,Fumiko, Ibaraki-shi Osaka 567-8680 (JP); INOUE,Tetsuo, Ibaraki-shi Osaka 567-8680 (JP); TANAKA,Akiko, Ibaraki-shi Osaka 567-8680 (JP); MATSUURA,Aimi, Ibaraki-shi Osaka 567-8680 (JP)
(74) Representative: Grünecker, Kinkeldey, Stockmair & Schwanhäusser
(86) International application number: PCT/JP2011/055938
(87) International publication number: WO 2011/115058

(57) **Abstract**

Disclosed is an optical sheet with an adhesive layer, which has excellent adhesion, excellent aggregability and excellent long-term durability, and wherein an adhesive layer part does not fill recesses and projections over time, said recesses and projections having been formed by processing. Specifically, an optical sheet with an adhesive layer is produced by arranging an adhesive layer on a recessed and projected surface of an optical film which has been subjected to processing for forming recesses and projections. In addition, the optical sheet with an adhesive layer is bonded to various light sources or image display elements, thereby obtaining light sources or image display devices that have improved light extraction efficiency without changing the designs of the light sources or image display elements, while securing uniform light emission and improving viewing angles especially in devices that comprises the image display elements.

## Description

### TECHNICAL FIELD

The invention relates to a pressure-sensitive adhesive layer-carrying optical sheet, a method for producing a pressure-sensitive adhesive layer-carrying optical sheet, a light source produced using a pressure-sensitive adhesive sheet layer-carrying optical sheet, and an image display device produced using a pressure-sensitive adhesive layer-carrying optical sheet. More specifically, the invention relates to a pressure-sensitive adhesive layer-carrying optical sheet for use in providing a light source capable of emitting light efficiently.

### BACKGROUND ART

In recent optical devices such televisions, monitors, game machines, and cellular phones, display quality such as brightness or contrast is improved by increasing the luminance of the screen, which is directly influenced by light emitted from a surface. To emit light uniformly from such a light source, therefore, measures are taken in the design of a light guide plate or in the design of the shape, arrangement, or other features of a cold cathode fluorescent lamp, LED, or any other light-emitting device itself, and measures are also taken to emit light at low power.

Measures are further taken to provide uniform and increased luminance by placing a diffusion plate, a retroreflecting plate, or any other optical film for diffusing light on a light guide plate. For power saving, the use of organic electroluminescent (EL) devices or light-emitting diodes (LEDs), which can be used as surface light sources for lighting, is also increasing, and measures are also taken to increase light extraction efficiency.

On the other hand, there are proposals in which projecting parts such as microlenses are attached to an image display device such as a liquid crystal cell to increase viewing angle (Patent Documents 1 to 3), and proposals in which projecting parts such as microlenses are brought into intimate contact with the light-emitting surface of an EL device or a light guide plate so that light extraction efficiency can be increased or light can be uniformly emitted (Patent Documents 4 to 9).

Unfortunately, the approaches disclosed in the patent documents have many problems in which specific practical details are not clear or the process or the design is sometimes complicated or difficult.

### PRIOR ART DOCUMENTS

### Patent Documents

Patent Document 1: Japanese Patent Application Laid-Open (JP-A) No. 07-120743
Patent Document 2: JP-A No. 09-127309
Patent Document 3: JP-A No. 2002-96395
Patent Document 4: JP-A No. 2000-148032
Patent Document 5: JP-A No. 2001-356704
Patent Document 6: JP-A No. 2001-357709
Patent Document 7: JP-A No. 2006-59543
Patent Document 8: JP-A No. 2008-27619
Patent Document 9: JP-A No. 2009-244482

### SUMMARY OF THE INVENTION

### PROBLEMS TO BE SOLVED BY THE INVENTION

An object of the invention is to provide a pressure-sensitive adhesive layer-carrying optical sheet which can easily and reliably increase light extraction efficiency and ensure uniform emission of light by simply being bonded to various light sources or display devices and which can increase viewing angle when bonded to image display devices.

Another object of the invention is to provide a method for producing such a pressure-sensitive adhesive layer-carrying optical sheet, a pressure-sensitive adhesive layer-carrying light source produced therewith, and a pressure-sensitive adhesive layer-carrying image display device produced therewith.

### MEANS FOR SOLVING THE PROBLEMS

As a result of earnest studies to solve the above problems, the inventors have found the pressure-sensitive adhesive layer-carrying optical sheet described below and accomplished the invention.

Thus, the invention is directed to a pressure-sensitive adhesive layer-carrying optical sheet, including: an optical film formed with projections and recesses; and a pressure-sensitive adhesive layer placed on the projection-and-recess pattern surface of the optical film, wherein the pressure-sensitive adhesive layer is fixed on part of each projection of the optical film formed with projections and recesses.

The pressure-sensitive adhesive layer-carrying optical sheet may further include a release liner.

Preferably, the projections of the optical film are partially embedded in the pressure-sensitive adhesive layer over 5% to 90% of their height.

The optical film may include a plurality of layers.

The pressure-sensitive adhesive layer may have a gel fraction of 70 to 98%.

The pressure-sensitive adhesive layer may have a refractive index of 1.460 or more.

The pressure-sensitive adhesive layer may have a storage modulus of 10,000 to 1,000,000 Pa at 23°C.

The 180° peel strength between the pressure-sensitive adhesive layer and the optical film may be 0.5 N or more.

The optical film may be a microlens, a prism sheet, or a light diffusion plate.

The pressure-sensitive adhesive layer may have a thickness of 1 to 100 µm.

The pressure-sensitive adhesive layer may be prepared from a pressure-sensitive adhesive composition including a (meth)acryl-based polymer as a main component.

The pressure-sensitive adhesive layer may be prepared from a curable pressure-sensitive adhesive composition containing a (meth)acryl-based polymer and one or a combination of two or more selected from the group consisting of an isocyanate crosslinking agent, an epoxy resin, a cationic photopolymerization initiator, and a heat-curing catalyst.

The (meth)acryl-based polymer may be a graft polymer including a (meth)acryl-based polymer backbone and a chain that contains a cyclic ether group-containing monomer component and is grafted onto the backbone.

The graft polymer may be a product obtained by graft polymerization of 2 to 50 parts by weight of the cyclic ether group-containing monomer onto 100 parts by weight of the (meth)acryl-based polymer backbone in the presence of 0.02 to 5 parts by weight of a peroxide.

The graft polymer may be a product obtained by graft polymerization of 2 to 50 parts by weight of the cyclic ether group-containing monomer and 5 to 50 parts by weight of any other monomer onto 100 parts by weight of the (meth)acryl-based polymer backbone in the presence of 0.02 to 5 parts by weight of a peroxide.

The pressure-sensitive adhesive layer may be prepared from a pressure-sensitive adhesive composition containing: a graft polymer including a (meth)acryl-based polymer backbone and a chain that contains a cyclic ether group-containing monomer component and is grafted onto the backbone; and a cationic photopolymerization initiator or a heat-curing catalyst.

The pressure-sensitive adhesive composition may contain 0.01 to 20 parts by weight of an isocyanate crosslinking agent based on 100 parts by weight of the (meth)acryl-based polymer backbone.

The pressure-sensitive adhesive composition may contain 0.01 to 20 parts by weight of a silane coupling agent based on 100 parts by weight of the (meth)acryl-based polymer backbone.

The invention is also directed to a method for producing the pressure-sensitive adhesive layer-carrying optical sheet according to any one of claims 1 to 18, including the step of bonding a pressure-sensitive adhesive layer to part of projections of an optical film formed with projections and recesses, wherein the pressure-sensitive adhesive layer is applied to a release liner.

The invention is also directed to a method for producing the pressure-sensitive adhesive layer-carrying optical sheet, including the steps of: applying an active energy ray to a pressure-sensitive adhesive layer applied to a release liner, wherein the pressure-sensitive adhesive composition contains a cationic photopolymerization initiator; and bonding the treated pressure-sensitive adhesive layer to part of projections of an optical film formed with projections and recesses.

The invention is also directed to an optical film-carrying light source, including: a light source; and any of the above pressure-sensitive adhesive layer-carrying optical sheets, of which the pressure-sensitive adhesive layer is bonded to the light source.

The invention is also directed to an optical film-carrying image display device, including: an image display device; and the pressure-sensitive adhesive layer-carrying optical sheet, of which the pressure-sensitive adhesive layer is bonded to the image display device.

### EFFECTS OF THE INVENTION

In the pressure-sensitive adhesive layer-carrying optical sheet of the invention, the pressure-sensitive adhesive layer part, into which the projection-and-recess pattern formed will not be sunk over time, has good tackiness or cohesiveness and high long-term durability. When bonded to various light sources or image display devices, therefore, the pressure-sensitive adhesive layer-carrying optical sheet of the invention can increase light extraction efficiency and ensure uniform emission of light without modifying the design of the light sources or image display devices, and particularly when bonded to a device including an image display device, it can increase viewing angle.

### BRIEF DESCRIPTION OF THE DRAWINGS

Fig. 1 is a diagram illustrating the pressure-sensitive adhesive layer-carrying optical sheet of the invention;
Fig. 2 is a diagram illustrating an embodiment in which the pressure-sensitive adhesive layer-carrying optical sheet of the invention includes a release liner; and
Fig. 3 is a diagram illustrating an embodiment in which the pressure-sensitive adhesive layer-carrying optical sheet of the invention is bonded to a light source or an image display device.

### EMBODIMENTS FOR CARRYING OUT THE INVENTION

The inventors have confirmed that in a commercially available monitor or the like, a diffusion plate for making uniform the distribution of light from a light guide plate integrally provided on a light source is simply placed on the light guide plate, and therefore, a thin air layer exists between the light guide plate and the diffusion plate, so that light loss occurs. To prevent the loss, measures have been examined, such as surface-treating the light guide plate itself to provide a diffusion function and eliminating the air layer using matching oil or the like between the light guide plate and the diffusion plate. Unfortunately, it has been found that the former is less adaptable to a significant increase in process number or product variations such as sizes, and the latter causes a problem such as fluid leakage due to heat from the light source. An in-plane light emitting organic EL device also has a difference in refractive index or the like between the light-emitting layer or glass and the air, and it still has a problem in that light cannot go out to the air interface. The use of microlenses or the like will make the improvement possible, but it has difficulty in being used practically. Therefore, these problems have been studied in detail.

The pressure-sensitive adhesive layer-carrying optical sheet of the invention includes: an optical film formed with projections and recesses; and a pressure-sensitive adhesive layer placed on the projection-and-recess pattern surface of the optical film. The pressure-sensitive adhesive layer is fixed on part of each projection of the optical film formed with projections and recesses.

Preferably, a release liner may be further attached to the pressure-sensitive adhesive layer.

In the invention, the optical film formed with projections and recesses may be, but not limited to, a microlens, a prism sheet, a light diffusion plate, or the like. The projection-and-recess pattern surface of such a sheet or plate may be in a form having uniform bullet-shaped, spherical, or pyramid-shaped projections with a diameter or circular base diameter of 1 to 100 µm.

In the invention, the method for producing the optical film formed with projections and recesses may be typically, but not limited to, pressing a uniform sheet or plate with a die to perform surface molding or a process including applying a liquid resin to the surface of a transfer mold and curing the resin with UV or heat to perform molding. Alternatively, a polymer solution containing dispersed fine particles may be so applied that a dry coating can be formed with a thickness smaller than the size of the fine particles, so that a diffusion plate can be formed with a projection-and-recess pattern surface, or a polymer melt may be kneaded with fine particles and then subjected to extrusion, so that a diffusion plate whose surface or interior has a light diffusion function can be formed.

In the invention, such an optical film may include a plurality of layers. Such layers may be in the form of a laminate including films made of different materials, which are placed on the opposite side from the projection-and-recess pattern surface in contact with the pressure-sensitive adhesive layer. For example, the opposite side of the optical film from the projection-and-recess pattern surface may be subjected to a hard coating treatment, so that scratch resistance can be provided. Anti-fouling properties, antistatic properties, or ultraviolet absorbing properties may also be imparted to the optical film. The hard coating treatment or the process of imparting anti-fouling, antistatic, or ultraviolet absorbing properties may be achieved by laminating an additional film. In addition, the opposite side from the projection-and-recess pattern surface to be in contact with the pressure-sensitive adhesive layer may also be subjected to a process of forming projections and recesses, so that light can be more efficiently emitted from the opposite surface. The projection-and-recess pattern may have a size of about 1 µm to about 100 µm.

The optical film to be used may be of any transparent type, and examples of such a material include acrylic resin, polyester resin, epoxy resin, polystyrene resin, polycarbonate resin, and norbornene resin. These materials may be used alone or in any combination to form a laminate. The adherend such as a light source for emitting light, the pressure-sensitive adhesive layer, and the optical film are preferably arranged so as to satisfy the order: the refractive index of the surface of the adherend ≤ the refractive index of the pressure-sensitive adhesive layer ≤ the refractive index of the optical film in order to prevent light loss between each pair of layers.

In a non-limiting example, when light is emitted from a poly(methyl methacrylate) light guide plate with a surface refractive index of 1.49, the arrangement to be used is preferably such that the pressure-sensitive adhesive has a refractive index of more than 1.49, and the optical film has a refractive index of 1.50 or more. Such a pressure-sensitive adhesive layer-carrying optical sheet according to the invention may be bonded to an adherend, below which light is applied, when used. The arrangement may be such that the pressure-sensitive adhesive layer has a refractive index higher than that of the surface of the adherend from which light is emitted and that the optical sheet has a refractive index higher than that of the pressure-sensitive adhesive layer, so that reflection can be prevented at the interface between each pair of layers, which allows light to be efficiently emitted without loss.

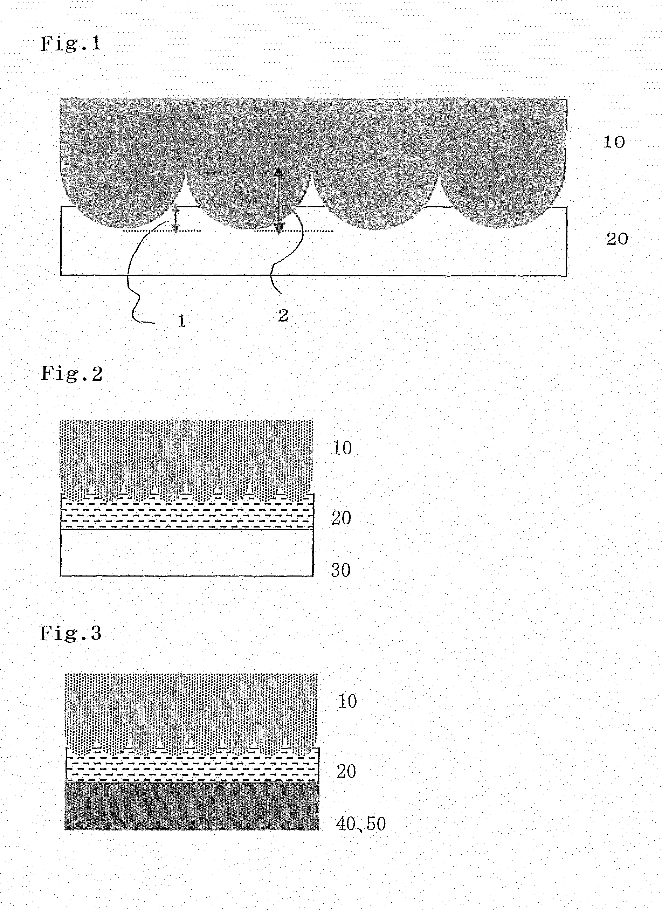

The pressure-sensitive adhesive layer is fixed on part of each projection of the optical film formed with projections and recesses. As used herein, the term "fixed on part of each projection" means that the recesses are not filled with the pressure-sensitive adhesive and the pressure-sensitive adhesive layer adheres to the tops of the projections so that an air layer exists between the pressure-sensitive adhesive layer and the optical film. Fig. 1 shows a specific example of such an arrangement in which the pressure-sensitive adhesive layer adheres to the optical film 10 at the tops of the projections thereof so that an air layer is formed due to the recesses of the optical film surface.

In a preferred mode of the invention, the projections are partially embedded in the pressure-sensitive adhesive layer over 5% to 90% of their height. In a more preferred mode, the projections are partially embedded in the pressure-sensitive adhesive layer over 10% to 80% of their height.

In the pressure-sensitive adhesive layer-carrying optical sheet of the invention, the pressure-sensitive adhesive layer is fixed on part of each projection of the optical films formed with projections and recesses, preferably in such a manner that the 180° peel strength between the pressure-sensitive adhesive layer and the optical film formed with projections and recesses is 0.5 N/20 mm or more. However, for example, if a problem such as capture of dust particles or misalignment occurs after the pressure-sensitive adhesive layer-carrying optical sheet is bonded to a light source or an image display device, it should be easily reworked, and it should maintain the adhesion for a long term without dropping off or peeling. To ensure such re-workability and long-term stability, a relatively high adhering strength should preferably be provided between the pressure-sensitive adhesive layer and the projections of the optical film formed with projections and recesses. For such an adhering strength, the 180° peel strength may be 0.7 N/20 mm or more, preferably 1.5 N/20 mm or more, more preferably 2 N/20 mm or more (and generally 10 N/20 mm or less). When the adhering strength is within this range in normal usage, the pressure-sensitive adhesive layer is prevented from remaining on the adherend or causing so-called destruction by anchor in the process of peeling off the optical film.

The projection-and-recess pattern surface of the optical film formed with projections and recesses may also be subjected to a treatment such as a corona treatment, a plasma treatment, or an undercoating treatment with a urethane resin, a silane coupling agent, or the like so that a higher adhering strength can be provided between the pressure-sensitive adhesive layer and the projections of the optical film to prevent destruction by anchor.

The pressure-sensitive adhesive used to form the pressure-sensitive adhesive layer preferably has a gel fraction of 70 to 98%, while the type of the adhesive is not restricted.

In general, the pressure-sensitive adhesive layer preferably has a refractive index of 1.460 or more.

At 23°C, the pressure-sensitive adhesive layer preferably has a storage modulus of 10,000 to 1,000,000 Pa, more preferably 7.2 x 10⁴ to 6.1 x 10⁵ Pa.

The pressure-sensitive adhesive layer preferably has a thickness of 1 to 100 µm, more preferably 2 to 100 µm.

In the pressure-sensitive adhesive layer-carrying optical sheet of the invention, the pressure-sensitive adhesive layer is preferably prepared from a pressure-sensitive adhesive composition containing a (meth)acryl-based polymer as a main component, which is non-limiting.

In the pressure-sensitive adhesive layer-carrying optical sheet of the invention, the pressure-sensitive adhesive layer is preferably prepared from a curable pressure-sensitive adhesive composition containing a (meth)acryl-based polymer and one or a combination of two or more selected from the group consisting of an isocyanate crosslinking agent, an epoxy resin, a cationic photopolymerization initiator, and a heat-curing catalyst.

In the invention, the (meth)acryl-based polymer may include any of linear, branched, and graft polymers containing 50% by weight or more of a (meth)acrylic monomer unit.

The pressure-sensitive adhesive layer preferably contains a graft polymer including a (meth)acryl-based polymer backbone and a chain that contains a cyclic ether group-containing monomer component and is grafted onto the backbone.

As used herein, the term "(meth)acryl-based polymer backbone" refers to a linear polymer containing 50% by weight or more of a (meth)acrylic monomer unit.

In the sheet of the invention, the pressure-sensitive adhesive layer also preferably contains a cationic photopolymerization initiator and/or a heat-curing catalyst, particularly when it contains a graft polymer.

Such a graft polymer is preferably obtained by graft polymerization of 2 to 50 parts by weight of a cyclic ether group-containing monomer onto 100 parts by weight of a (meth)acryl-based polymer backbone in the presence of 0.02 to 5 parts by weight of a peroxide.

Such a graft polymer is also preferably obtained by graft polymerization of 2 to 50 parts by weight of a cyclic ether group-containing monomer and 5 to 50 parts by weight of any other monomer onto 100 parts by weight of a (meth)acryl-based polymer backbone in the presence of 0.02 to 5 parts by weight of a peroxide.

The monomer unit in the (meth)acryl-based polymer may be derived from any (meth)acrylate monomer without restriction. Preferably, for example, an alkyl (meth)acrylate having an alkyl group of 4 or more carbon atoms makes up 50% by weight or more of all monomer units of the (meth)acryl-based polymer.

As used herein, the simple term "alkyl (meth)acrylate" refers to a (meth)acrylate having a straight or branched chain alkyl group. The number of carbon atoms in the alkyl group should be 4 or more, preferably from 4 to 9. The term "(meth)acrylate" refers to acrylate and/or methacrylate, and "(meth)" is used in the same meaning in the description.

Examples of the alkyl (meth)acrylate include n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, and isostearyl (meth)acrylate. Particular examples include n-butyl (meth)acrylate and 2-ethylhexyl (meth)acrylate, and these may be used alone or in combination.

In an embodiment of the present invention, the amount of the alkyl (meth)acrylate is 50% by weight or more, preferably 80% by weight or more, more preferably 90% by weight or more, based on the total amount of all monomer components for the (meth)acrylic polymer. The amount of an alkyl (meth)acrylate is preferably 99.8% by weight or less and may be 98% by weight or less or 97% by weight or less.

In an embodiment of the present invention, the (meth)acryl-based polymer includes a hydroxyl group-containing monomer component having at least one hydroxyl group in an alkyl group. Specifically, this monomer is a hydroxyalkyl(meth)acrylic monomer containing a hydroxyalkyl group with one or more hydroxyl groups. In this monomer, the hydroxyl group is preferably present at the end of the alkyl group. The number of carbon atoms in the alkyl group is preferably from 2 to 8, more preferably from 4 to 8, even more preferably from 4 to 6. The addition of such a hydroxyl alkyl(meth)acryl monomer may have a good effect on the position where hydrogen is withdrawn during the graft polymerization or on the compatibility between the graft polymer and a homopolymer of the cyclic ether group-containing monomer, which is produced during the graft polymerization, and therefore, it is considered to be useful for the production of a graft polymer having good heat resistance.

Any monomer having a hydroxyl group and an unsaturated double bond-containing polymerizable functional group of a (meth)acryloyl group may be used as such a monomer. Examples of such a monomer include hydroxyalkyl (meth)acrylate such as 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, or 12-hydroxylauryl (meth)acrylate; 4-hydroxymethylcyclohexyl (meth)acrylate, and 4-hydroxybutyl vinyl ether. Among them, hydroxyalkyl (meth)acrylate is preferably used.

The amount of the hydroxylalkyl(meth)acrylate is 0.02% by weight or more and 10% by weight or less, preferably 0.04% by weight or more and 5% by weight or less, and more preferably 0.05% by weight or more and 3% by weight or less based on the whole amount of monomer component.

Besides the above monomers, other copolymerizable monomers may also be used alone or in combination as a monomer component(s) to form the (meth)acryl-based polymer, as long as the objectives of the present invention are not hindered.

For example, the unsaturated carboxylic acid-containing monomer other than the monomers above, can be used. Any monomer having a carboxyl group and an unsaturated double bond-containing polymerizable functional group such as a (meth)acryloyl group or a vinyl group may be used without restriction as the unsaturated carboxylic acid-containing monomer. Examples of the unsaturated carboxylic acid-containing monomer include (meth)acrylic acid, carboxyethyl (meth)acrylate, carboxypentyl (meth)acrylate, itaconic acid, maleic acid, fumaric acid, and crotonic acid. These may be used alone or in any combination. Among these, (meth)acrylic acid, particularly, acrylic acid is preferably used.

The unsaturated carboxylic acid-containing monomer is preferably used in an amount of 0.01 to 2% by weight, more preferably 0.05 to 2% by weight, even more preferably 0.05 to 1.5% by weight, in particular, preferably 0.1 to 1% by weight, based on the total amount of the monomer components used to form the (meth)acryl-based polymer.

Examples of other copolymerizable monomers include (meth)acrylate having less than 4 carbon atoms, aromatic-ring containing monomers having an aromatic ring and an unsaturated double bond-containing polymerizable functional group such as a (meth)acryloyl group or a vinyl group. Examples of (meth)acrylate having less than 4 carbon atoms are methy(meth) acrylate, ethyl(meth)acrylate, propyl(meth)acrylate and examples of aromatic ring-containing monomers include phenoxyethyl (meth)acrylate, benzyl (meth)acrylate, phenol ethylene oxide-modified (meth)acrylate, 2-naphthoethyl (meth)acrylate, 2-(4-methoxy-1-naphthoxy)ethyl (meth)acrylate, phenoxypropyl (meth)acrylate, phenoxydiethylene glycol (meth)acrylate, and polystyryl (meth)acrylate.

Examples also include acid anhydride group-containing monomers such as maleic anhydride and itaconic anhydride; caprolactone adducts of acrylic acid; sulfonic acid group-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; phosphate group-containing monomers such as 2-hydroxyethylacryloyl phosphate; and alkoxyalkyl (meth)acrylate monomers such as methoxyethyl (meth)acrylate and ethoxyethyl (meth)acrylate.

Examples that may also be used include vinyl monomers such as vinyl acetate, vinyl propionate, styrene, α-methylstyrene, and N-vinylcaprolactam; epoxy group-containing monomers such as glycidyl (meth)acrylate, methylglycidyl (meth)acrylate, and 3,4-epoxycyclohexylmethyl (meth)acrylate; glycol acrylate monomers such as polyethylene glycol (meth)acrylate, polypropylene glycol (meth)acrylate, methoxyethylene glycol (meth)acrylate, and methoxypolypropylene glycol (meth)acrylate; acrylate monomers such as tetrahydrofurfuryl (meth)acrylate, fluoro(meth)acrylate, silicone (meth)acrylate, and 2-methoxyethyl acrylate; and amide group-containing monomers, amino group-containing monomers, imide group-containing monomers, N-acryloylmorpholine, and vinyl ether monomers.

In an embodiment of the invention, the (meth)acryl-based polymer preferably has a weight average molecular weight of 600,000 or more, more preferably 700,000 to 3,000,000. The weight average molecular weight may refer to a polystyrene-equivalent weight average molecular weight as measured and calculated by gel permeation chromatography (GPC).

The method for producing such a (meth)acryl-based polymer may be appropriately selected from known production methods such as solution polymerization, bulk polymerization, emulsion polymerization, and various types of radical polymerization. The resulting (meth)acryl-based polymer may be any of a random copolymer and a block copolymer.

In solution polymerization, for example, ethyl acetate, toluene, or the like may be used as a polymerization solvent. An example of solution polymerization includes performing the reaction under a stream of inert gas such as nitrogen in the presence of a polymerization initiator typically under the reaction conditions of a temperature of about 50 to about 70°C and a time period of about 5 to about 30 hours.

Any appropriately selected polymerization initiator, chain transfer agent, emulsifying agent, or the like may be used for radical polymerization. The weight average molecular weight of the (meth)acryl-based polymer can be controlled by the amount of the addition of the polymerization initiator or the chain transfer agent or by the reaction conditions. The amount of the addition may be controlled as appropriate depending on the type of these materials.

Examples of the polymerization initiator include, but are not limited to, azo initiators such as 2,2'-azobisisobutylonitrile, 2,2'-azobis(2-amidinopropane)dihydrochloride, 2,2'-azobis[2-(5-methyl-2-imidazoline-2-yl)propaneldihydrochloride, 2,2'-azobis(2-methylpropionamidine)disulfate, 2,2'-azobis(N,N'-dimethyleneisobutylamidine), and 2,2'-azobis[N-(2-carboxyethyl)-2-methylpropionamidine]hydrate (VA-057, manufactured by Wako Pure Chemical Industries, Ltd.); persulfates such as potassium persulfate and ammonium persulfate; peroxide initiators such as di(2-ethylhexyl)peroxydicarbonate, di(4-tert-butylcyclohexyl)peroxydicarbonate, di-sec-butylperoxydicarbonate, tert-butylperoxyneodecanoate, tert-hexylperoxypivalate, tert-butylperoxypivalate, dilauroyl peroxide, di-n-octanoyl peroxide, 1,1,3,3-tetramethylbutylperoxy-2-ethyl hexanoate, di(4-methylbenzoyl) peroxide, dibenzoyl peroxide, tert-butylperoxyisobutylate, 1,1-di(tert-hexylperoxy)cyclohexane, tert-butylhydroperoxide, and hydrogen peroxide; and redox system initiators of a combination of a peroxide and a reducing agent, such as a combination of a persulfate and sodium hydrogen sulfite and a combination of a peroxide and sodium ascorbate.

These polymerization initiators may be used alone or in combination of two or more. The total content of the polymerization initiator(s) is preferably from 0.005 to 1 part by weight, more preferably from 0.02 to 0.5 parts by weight, based on 100 parts by weight of the monomers.

For example, when the (meth)acryl-based polymer with the above weight average molecular weight is produced using 2,2'-azobisisobutylonitrile as the polymerization initiator, the polymerization initiator is preferably used in an amount of about 0.06 to about 0.3 parts by weight, more preferably about 0.08 to about 0.2 parts by weight, based on 100 parts by weight of the total amount of the monomer components.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol. The chain transfer agents may be used alone or in combination of two or more. The total content of the chain transfer agent(s) may be about 0.1 parts by weight or less, based on 100 parts by weight of the total amount of the monomer components.

Emulsion polymerization may also be performed using an emulsifying agent, examples of which include an anionic emulsifying agent such as sodium lauryl sulfate, ammonium lauryl sulfate, sodium dodecylbenzenesulfonate, ammonium polyoxyethylene alkyl ether sulfate, or sodium polyoxyethylene alkyl phenyl ether sulfate; and a nonionic emulsifying agent such as polyoxyethylene alkyl ether, polyoxyethylene alkyl phenyl ether, polyoxyethylene fatty acid ester, or a polyoxyethylene-polyoxypropylene block polymer. These emulsifying agents may be used alone or in combination of two or more.

The emulsifying agent may be a reactive emulsifier such as an emulsifier having an introduced radically polymerizable functional group such as a propenyl group or an allyl ether group, examples of which include AQUALON HS-10, HS-20, KH-10, BC-05, BC-10, and BC-20 (all manufactured by DAI-ICHI KOGYO SEIYAKU CO., LTD.), and ADEKA REASOAP SE-10N (manufactured by ADEKA CORPORATION), and others. The reactive emulsifier is preferred, because after polymerization, it can be incorporated into a polymer chain to improve water resistance. Based on 100 parts by weight of the total amount of the monomer components, the emulsifier is preferably used in an amount of 0.3 to 5 parts by weight, more preferably 0.5 to 1 part by weight, in view of polymerization stability or mechanical stability.

The (meth)acryl-based polymer preferably may have a glass transition temperature (Tg) of 250 K or less, preferably 240 K or less. The glass transition temperature is preferably 200 K or more. When the glass transition temperature is 250 K or less, the resulting pressure-sensitive adhesive composition has good heat resistance and high internal cohesive strength. Such a (meth)acryl-based polymer can be prepared using appropriately selected monomer components and composition ratio. For example, the polymer with such a glass transition temperature can be obtained by solution polymerization using 0.06 to 0.2 parts by weight of a polymerization initiator such as azobisisobutylonitrile or benzoyl peroxide and a polymerization solvent such as ethyl acetate, in which the reaction is performed under a nitrogen stream at 50°C to 70°C for 8 to 30 hours. The glass transition temperature (Tg) may be calculated from the following Fox formula: 1/Tg=W1/Tg1+W2/Tg2+W3/Tg3+..., wherein Tg1, Tg2, Tg3, and so on each represent the glass transition temperature (expressed by absolute temperature) of each of homopolymers 1, 2, 3, and so on of the copolymerized components, and W1, W2, W3, and so on each represent the weight fraction of each copolymerized component. The glass transition temperature (Tg) of each homopolymer was obtained from Polymer Handbook, 4th edition, John Wiley & Sons. Inc.

Subsequently, the resulting (meth)acryl-based polymer is directly subjected to graft polymerization, or the resulting (meth)acryl-based polymer is diluted with a diluent, and the diluted solution is subjected to graft polymerization.

Examples of the diluent include, but are not limited to, ethyl acetate and toluene.

The graft polymerization is performed by allowing the cyclic ether group-containing monomer and optionally any other monomer(s) to react with the (meth)acryl-based polymer.

In this process, the cyclic ether group-containing monomer is preferably, but not limited to, an epoxy group-containing monomer, an oxetane group-containing monomer, or a combination of both monomers.

For example, the epoxy group-containing monomer may be 4-hydroxybutylglycidyl acrylate, glycidyl acrylate, glycidyl methacrylate, 3,4-epoxycyclohexylmethyl acrylate, 3,4-epoxycyclohexylmethyl methacrylate, or 4-hydroxybutyl acrylate glycidyl ether, and these may be used alone or in any combination.

For example, the oxetane group-containing monomer may be 3-oxetanylmethyl (meth)acrylate, 3-methyl-3-oxetanylmethyl (meth)acrylate, 3-ethyl-3-oxetanylmethyl (meth)acrylate, 3-butyl-3-oxetanylmethyl (meth)acrylate, or 3-hexyl-3-oxetanylmethyl (meth)acrylate, and these may be used alone or in any combination.

The amount of the cyclic ether group-containing monomer is preferably 2 parts by weight or more, more preferably 3 parts by weight or more, based on 100 parts by weight of the (meth)acryl-based polymer. The upper limit of the amount is preferably, but not limited to, 50 parts by weight or less, more preferably 30 parts by weight or less. If the amount of the cyclic ether group-containing monomer is 2 parts by weight or more, the function of the composition as a pressure-sensitive adhesive can be sufficiently produced, but if it is 100 parts by weight or more, the composition may have reduced tackiness so that it may be less tacky at the initial stage.

In the graft polymerization, any other monomer capable of undergoing co-grafting may also be used together with the cyclic ether group-containing monomer. Such a monomer may be any monomer containing no cyclic ether group, for example, which may be alkyl (meth)acrylate of 1 to 9 carbon atoms. Examples of alkyl (meth)acrylate include methyl (meth)acrylate, ethyl (meth)acrylate, n-butyl (meth)acrylate, and 2-ethylhexyl acrylate. Alicyclic (meth)acrylates such as cyclohexyl (meth)acrylate and isobornyl (meth)acrylate may also be used. These may be used alone or in any combination.

When such an additional monomer capable of undergoing co-grafting is used, the light irradiation dose for curing the pressure-sensitive adhesive can be reduced. This is considered to be because of an increase in the mobility of the grafted chain or an increase in the compatibility between the backbone polymer and the grafted chain or the ungrafted chain as a by-product.

It is also preferred that such an additional monomer should be selected from the same monomers as those used to form the main chain (backbone), namely, the (meth)acryl-based polymer.

The amount of the other monomer(s) than the cyclic ether group-containing monomer is, if exist, from 90:10 to 10:90 in a weight ratio with cyclic ether group-containg monomer, preferably from 80:20 to 20:80. In some cases, the content of the other monomer(s) is low, the effect of reducing the light irradiation dose for curing may be insufficient, and if it is high, peeling resistance after the light irradiation may be high.

The graft polymerization conditions are not restricted, and the graft polymerization may be performed by methods known to those skilled in the art. In the polymerization, a peroxide is preferably used as a polymerization initiator.

The amount of such a polymerization initiator may be from 0.02 to 5 parts by weight, based on 100 parts by weight of the (meth)acryl-based polymer. If the amount of the polymerization initiator is small, it may take too long to complete the graft polymerization reaction, and if the amount of the polymerization initiator is large, a large amount of a homopolymer of the cyclic ether group-containing monomer may be produced, which is not preferred.

In the case of solution polymerization, for example, the graft polymerization may be performed by a non-limiting process including adding the cyclic ether group-containing monomer and a solvent capable of controlling viscosity to a solution of the acryl-based copolymer, replacing the air with nitrogen, then adding 0.02 to 5 parts by weight of a peroxide polymerization initiator such as dibenzoyl peroxide to the mixture, and heating the mixture at 50°C to 80°C for 4 to 15 hours.

The properties (such as the molecular weight of the graft polymer and the size of the branched part of the graft polymer) of the graft polymer to be obtained can be selected as appropriate using the reaction conditions.

Regardless of whether the (meth)acryl-based polymer according to the invention is of a linear, branched, or graft type, a cationic photopolymerization initiator or a heat-curing catalyst may be added to the curable composition according to the invention. In the invention, when the (meth)acryl-based polymer is a graft polymer, such an additional component is particularly preferred.

The cationic photopolymerization initiator is optionally added. Any cationic photopolymerization initiator known to those skilled in the art may be preferably used. More specifically, at least one selected from the group consisting of an arylsulfonium hexafluorophosphate salt, a triarylsulfonium salt, a sulfonium hexafluorophosphate salts, and bis(alkylphenyl)iodonium hexafluorophosphate may be used.

Such cationic photopolymerization initiators may be used alone or in combination of two or more, and the total content of the cationic photopolymerization initiator(s) may be from 0.1 to 5 parts by weight, preferably from 0.3 to 3 parts by weight, based on 100 parts by weight of the (meth)acryl-based polymer.

Any cyclic ether group-containing heat-curing catalyst known to those skilled in the art may be used as the heat-curing catalyst. More specifically, at least one selected from the group consisting of an imidazole compound, an acid anhydride, a phenolic resin, a Lewis acid complex, an amino resin, a polyamine, and a melamine resin may be used. In particular, an imidazole compound is preferred, examples of which include, but are not limited to, 2-methylimidazole, 2-undecylimidazole, 2-heptadecylimidazole, 1,2-dimethylimidazole, 2-ethyl-4-methylimidzole, 2-phenylimidazole, 2-phenyl-4-methylimidazole, 1-benzyl-2-methylimidzole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium trimellitate, and 1-cyanoethyl-2-phenylimidazolium trimellitate. These compounds may be selected in view of the curing start temperature, the compatibility with the pressure-sensitive adhesive, or the like.

For example, when the pressure-sensitive adhesive polymer is in the form of a water dispersion type emulsion, 1,2-dimethylimidazole may be selected, when storage stability is a priority or heat-curing is to be performed at relatively high temperature, 1-cyanoethyl-2-undecylimidazole may be selected, and when curing is to be performed at relatively low temperature, 2-phenylimidazole may be selected.

Such heat-curing catalysts may be used alone or in combination of two or more, and the total content of the heat-curing catalyst(s) may be from 0.1 to 5 parts by weight, preferably from 0.1 to 3 parts by weight, based on 100 parts by weight of the (meth)acryl-based polymer.

If necessary, a crosslinking agent may be added to the pressure-sensitive adhesive composition for the pressure-sensitive adhesive layer-carrying optical sheet of the invention. The crosslinking agent may be added in the absence of the cationic photopolymerization initiator or the heat-curing catalyst. The crosslinking agent is typically, but not limited to, an isocyanate crosslinking agent which is a compound having two or more isocyanate groups (which may include functional groups that are temporarily protected with an isocyanate blocking agent or by oligomerization and are convertible to isocyanate groups) per molecule.

Examples of the isocyanate crosslinking agent include aromatic isocyanates such as tolylene diisocyanate and xylene diisocyanate, alicyclic isocyanates such as isophorone diisocyanate, and aliphatic isocyanates such as hexamethylene diisocyanate.

More specifically, examples of the isocyanate crosslinking agent include lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as a trimethylolpropane-tolylene diisocyanate trimer adduct (CORONATE L (trade name) manufactured by NIPPON POLYURETHANE INDUSTRY CO., LTD.), a trimethylolpropane-hexamethylene diisocyanate trimer adduct (CORONATE HL (trade name) manufactured by NIPPON POLYURETHANE INDUSTRY CO., LED.), and an isocyanurate of hexamethylene diisocyanate (CORONATE HX (trade name) manufactured by NIPPON POLYURETHANE INDUSTRY CO., LED.); polyether polyisocyanates and polyester polyisocyanates; adducts thereof with various polyols; and polyisocyanates polyfunctionalized with an isocyanurate bond, a biuret bond, an allophanate bond, or the like. In particular, aliphatic isocyanates are preferably used, because of their high reaction speed.

These isocyanate crosslinking agents may be used alone or in combination of two or more. The total content of the isocyanate crosslinking agent(s) is preferably from 0.01 to 2 parts by weight, more preferably from 0.02 to 2 parts by weight, even more preferably from 0.05 to 1.5 parts by weight, based on 100 parts by weight of the (meth)acryl-based polymer. The content may be appropriately determined taking into account cohesive strength, prevention of delamination in a durability test, or the like.

An organic crosslinking agent or a polyfunctional metal chelate may also be used together as the crosslinking agent. The organic crosslinking agent may be an epoxy crosslinking agent (which includes a compound having two or more epoxy groups per molecule). Examples of such an epoxy crosslinking agent include ethylene glycol diglycidyl ether, propylene glycol diglycidyl ether, terephthalic acid diglycidyl ester acrylate, and spiroglycol diglycidyl ether. These may be used alone or in combination of two or more.

The polyfunctional metal chelate is composed of an organic compound and a polyvalent metal that is covalently or coordinately bonded to the organic compound. Examples of the polyvalent metal atom include Al, Cr, Zr, Co, Cu, Fe, Ni, V, Zn, In, Ca, Mg, Mn, Y, Ce, Sr, Ba, Mo, La, Sn, and Ti. The organic compound has a covalent or coordinate bond-forming atom such as an oxygen atom. Examples of the organic compound include alkyl esters, alcohol compounds, carboxylic acid compounds, ether compounds, and ketone compounds.

In an embodiment of the invention, an oxazoline crosslinking agent or a peroxide may be further added as the crosslinking agent.

Any oxazoline crosslinking agent having an oxazoline group in the molecule may be used without restriction. The oxazoline group may be any of a 2-oxazoline group, a 3-oxazoline group, or a 4-oxazoline group. The oxazoline crosslinking agent is preferably a copolymer of an addition-polymerizable oxazoline and an unsaturated monomer, in particular, which is preferably produced using 2-isopropenyl-2-oxazoline as the addition-polymerizable oxazoline. Examples include EPOCROS WS-500 (trade name) manufactured by NIPPON SHOKUBAI CO., LTD., etc.

Any peroxide capable of producing active radical species upon heating and promoting the crosslinking of the base polymer in the pressure-sensitive adhesive composition may be appropriately used. In view of workability or stability, a peroxide with a one-minute half-life temperature of 80°C to 160°C is preferably used, and a peroxide with a one-minute half-life temperature of 90°C to 140°C is more preferably used.

Examples of peroxides that may be used include di(2-ethylhexyl) peroxydicarbonate (one-minute half-life temperature: 90.6°C), di(4-tert-butylcyclohexyl) peroxydicarbonate (one-minute half-life temperature: 92.1°C), di-sec-butyl peroxydicarbonate (one-minute half-life temperature: 92.4°C), tert-butyl peroxyneodecanoate (one-minute half-life temperature: 103.5°C), tert-hexyl peroxypivalate (one-minute half-life temperature: 109.1°C), tert-butyl peroxypivalate (one-minute half-life temperature: 110.3°C), dilauroyl peroxide (one-minute half-life temperature: 116.4°C), di-n-octanoylperoxide (one-minute half-life temperature: 117.4°C), 1,1,3,3-tetramethylbutylperoxy-2-ethyl hexanoate (one-minute half-life temperature: 124.3°C), di(4-methylbenzoyl) peroxide (one-minute half-life temperature: 128.2°C), dibenzoyl peroxide (one-minute half-life temperature: 130.0°C), tert-butyl peroxyisobutylate (one-minute half-life temperature: 136.1°C), and 1,1-di(tert-hexylperoxy)cyclohexane (one-minute half-life temperature: 149.2°C). In particular, di(4-tert-butylcyclohexyl) peroxydicarbonate (one-minute half-life temperature: 92.1°C), dilauroyl peroxide (one-minute half-life temperature: 116.4°C), dibenzoyl peroxide (one-minute half-life temperature: 130.0°C), or the like is preferably used, because they can provide high crosslinking reaction efficiency.

The half life of the peroxide is an indicator of how fast the peroxide can be decomposed and refers to the time required for the remaining amount of the peroxide to reach one half of the original amount. The decomposition temperature required for a certain half life time and the half life time obtained at a certain temperature are shown in catalogs furnished by manufacturers, such as "organic Peroxide Catalog, 9th Edition, May, 2003" furnished by NOF CORPORATION.

These peroxides may be used alone or in combination of two or more. The total content of the peroxide(s) may be from 0.01 to 2 parts by weight, preferably from 0.04 to 1.5 parts by weight, more preferably from 0.05 to 1 part by weight, based on 100 parts by weight of the (meth)acryl-based polymer. The content may be appropriately selected within this range so that workability, re-workability, crosslink stability, peelability, or the like can be controlled.

The amount of decomposition of the peroxide may be determined by a method of measuring the peroxide residue after the reaction process by high performance liquid chromatography (HPLC).

More specifically, for example, after the reaction process, about 0.2 g of each pressure-sensitive adhesive composition is taken out and immersed in 10 ml of ethyl acetate and subjected to shaking extraction at 25°C and 120 rpm for 3 hours in a shaker, and then allowed to stand at room temperature for 3 days. Subsequently, 10 ml of acetonitrile is added, and the mixture is shaken at 25°C and 120 rpm for 30 minutes. About 10 µl of the liquid extract obtained by filtration through a membrane filter (0.45 µm) is subjected to HPLC by injection and analyzed so that the amount of the peroxide after the reaction process is determined.

When a pressure-sensitive adhesive layer is formed using the crosslinking agent(s), the total content of the crosslinking agent(s) should be controlled, and the effect of the crosslinking temperature or the crosslinking time should be fully taken into account.

The photocurable pressure-sensitive adhesive composition of the invention may further contain an epoxy resin or an oxetane resin for further increasing adhesive strength or heat resistance.

Examples of the epoxy resin include bifunctional or polyfunctional epoxy resins such as a bisphenol A type, a bisphenol F type, a bisphenol S type, a brominated bisphenol A type, a hydrogenated bisphenol A type, a bisphenol AF type, a biphenyl type, a naphthalene type, a fluorene type, a phenol novolac type, a cresol novolac type, a trishydroxyphenylmethane type, and a tetraphenylolethane type, a hydantoin type, and a glycidyl amine type such as a trisglycidyl isocyanurate type. These epoxy resins may be used alone or in combination of two or more.

These epoxy resins may be, but not limited to, commercially available epoxy resins. Examples of such commercially available epoxy resins include, but are not limited to, jER 828 and jER 806 manufactured by JAPAN EPOXY RESIN CO., LTD., known as bisphenol type epoxy resins; YX8000 and YX8034 manufactured by JAPAN EPOXY RESIN CO., LTD., known as alicyclic epoxy resins; EP4000 and EP4005 manufactured by ADEKA CORPORATION; and Denacol EX-313, EX-512, EX-614B, and EX-810 manufactured by NAGASE CHEMTEX CORPORATION, known as polyglycidyl ethers of polyalcohol.

Known oxetane resins may be used, such as xylylene dioxetane such as 1,4-bis{[(3-ethyl-3-oxetanyl)methoxy]methyl}benzene, 3-ethyl-3-{[3-ethyloxetane-3-yl]methoxy}methyl}oxetane, 3-ethylhexyloxetane, 3-ethyl-3-hydroxyoxetane, and 3-ethyl-3-hydroxymethyloxetane. These oxetane resins may be used alone or in combination of two or more.

The oxetane resins may be, but not limited to, commercially available oxetane resins. Examples of such commercially available oxetane resins include, but are not limited to, ARON OXETANE OXT-121, OXT-221, OXT-101, and OXT-212 manufactured by TOAGOSEI CO., LTD.

One or both of such epoxy and oxetane resins may be used alone or in combination to form the photocurable pressure-sensitive adhesive composition of the invention.

In the present invention, epoxy resins and/or oxetane resins can be added to straight chain, branched chain, or graft chain type. If added, the total amount of the epoxy resin and/or the oxetane resin and the like is preferably 5 parts by weight or more, more preferably 10 parts by weight or more, and preferably 100 parts by weight or less, more preferably 70 parts by weight or less, based on 100 parts by weight of the graft polymer. Within such scope, the composition exerts remarkable adhesive strength and has sufficient curability.

A further additive such as a tackifier or a softening agent may be added to the pressure-sensitive adhesive composition for the pressure-sensitive adhesive layer-carrying optical sheet of the invention. The tackifier and the softening agent may be used in a total amount of 10 to 100 parts by weight, preferably 20 to 80 parts by weight based on 100 parts by weight of the (meth)acryl-based polymer.

Specifically, an aromatic ring-containing tackifier with a refractive index in the range of 1.51 to 1.75 may be used for the purpose of controlling the refractive index of the pressure-sensitive adhesive layer. A colored tackifier is not preferred, because it can tint the pressure-sensitive adhesive, and therefore, a transparent tackifier may be used. An index of the transparency should be a Gardner color of 1 or less for a 50% toluene solution. Examples of the tackifier include a styrene oligomer, a phenoxyethyl acrylate oligomer, a copolymer of styrene and α-methylstyrene, a copolymer of vinyl toluene and α-methylstyrene, a hydrogenated C9 petroleum resin, a hydrogenation product of terpene phenol, and hydrogenation products of rosin and derivatives thereof. In this regard, less than 30 parts by weight of a tackifier with a softening point of 40°C or less may be used in combination with 20 parts by weight or more of another tackifier with a softening point of 50°C or more (50 parts by weight in total) based on 100 parts by weight of the (meth)acryl-based polymer, which is preferred for heat resistance.

Based on 100 parts by weight of the (meth)acryl-based polymer, these tackifiers may be used in an amount of 10 to 100 parts by weight, preferably 20 to 80 parts by weight, to adjust the refractive index to a specific value. If the amount is too small, the refractive index cannot be increased sufficiently, and if it is too large, the material may be so hard that the tackiness may be undesirably reduced.

A phenol addition product of terpene rein (terpene phenolic resin) may also be used. The reaction with phenol is also advantageous in that heat resistance is improved.

When a pressure-sensitive adhesive containing such an acryl-based polymer composition is applied to a hydrophilic adherend such as glass, a silane coupling agent may also be added to increase interface water resistance. In this case, the silane coupling agent is preferably added in an amount of 0.01 to 20 parts by weight, more preferably 0.02 to 1.0 part by weight based on 100 parts by weight of the (meth)acryl-based polymer. Within the range, the adhering strength can be adequately controlled, so that good removability and higher water resistance can be provided.

Examples of the silane coupling agent include an epoxy group-containing silane coupling agent such as 3-glycidoxypropyltrimethoxysilane, 3-glycidoxypropylmethyldiethoxysilane, or 2-(3,4-epoxycyclohexyl)ethyltrimethoxysilane; an amino group-containing silane coupling agent such as 3-aminopropyltrimethoxysilane, N-(2-aminoethyl)-3-aminopropylmethyldimethoxysilane, or 3-triethoxysilyl-N-(1,3-dimethyl-butylidene)propylamine; a (meth)acrylic group-containing silane coupling agent such as 3-acryloxypropyltrimethoxysilane or 3-methacryloxypropyltriethoxysilane; and an isocyanate group-containing silane coupling agent such as 3-isocyanatopropyltriethoxysilane. The silane coupling agent may be added in an amount of 0.01 to 2 parts by weight, preferably 0.02 to 1.0 part by weight, based on 100 parts by weight of the (meth)acryl-based polymer. Within this range, the adhering strength to a liquid crystal cell can be adequately controlled, so that good removability and higher durability can be provided.

The pressure-sensitive adhesive composition for the pressure-sensitive adhesive layer-carrying optical sheet of the invention may also contain any other known additive such as a power of a colorant, a pigment or the like, a dye, a surfactant, a plasticizer, a tackifier, a surface lubricant, a leveling agent, a softening agent, an antioxidant, an age resistor, a light stabilizer, an ultraviolet absorbing agent, a polymerization inhibitor, an inorganic or organic filler, a metal powder, or a particulate or flaky material, which may be added as appropriate depending on the intended use. Within the controllable range, a reducing agent may also be added for use of a redox system.

A preferred non-limiting method of forming the pressure-sensitive adhesive layer according to the invention includes applying the composition to a release liner or any other release-treated material, removing the polymerization solvent and so on by drying, and crosslinking the composition to form the pressure-sensitive adhesive layer. The material used to form the release liner may be any appropriate thin material such as a porous backing of paper, cloth, nonwoven fabric, or the like, a film or sheet of plastic such as polyethylene, polypropylene, polyethylene terephthalate, polybutene, polybutadiene, polymethylpentene, polyvinyl chloride, vinyl chloride copolymer, polybutylene terephthalate, polyurethane, or ethylene-vinyl acetate copolymer, a net, a foam, a metal foil, or a laminate thereof. Among them, a plastic film is advantageously used because it has high surface smoothness.

The thickness of the release liner is generally from about 5 to about 200 µm, preferably from about 5 to about 100 µm. If necessary, the release liner may be subjected to a release treatment and an antifouling treatment with a silicone, fluoride, long-chain alkyl, or fatty acid amide release agent, silica powder or the like, or subjected to an antistatic treatment of coating type, kneading and mixing type, vapor-deposition type, or the like. In particular, when the surface of the release liner is appropriately subjected to a release treatment such as a silicone treatment, a long-chain alkyl treatment, or a fluorine treatment, the peeling property from the pressure-sensitive adhesive layer can be further increased.

Various methods may be used to form the pressure-sensitive adhesive layer. Examples of such methods include roll coating, kiss roll coating, gravure coating, reverse coating, roll brush coating, spray coating, dip roll coating, bar coating, knife coating, air knife coating, curtain coating, lip coating, and extrusion coating with a die coater or the like.

The thickness of the pressure-sensitive adhesive layer is typically, but not limited to, from about 1 to about 100 µm, preferably from 3 to 70 µm, more preferably from 5 to 50 µm, even more preferably from 5 to 35 µm.

In the process of forming the pressure-sensitive adhesive layer by drying, any appropriate method may be used for drying the pressure-sensitive adhesive, depending on the purpose. Preferably, a method of heating and drying the coating film is used. The heating and drying temperature is preferably from 40°C to 200°C, more preferably from 50°C to 180°C, in particular, preferably from 70°C to 170°C. When the heating temperature is set within the range, a pressure-sensitive adhesive with good adhesive properties can be obtained. Any appropriate drying time may be used as needed. The drying time is preferably from 5 seconds to 20 minutes, more preferably from 5 seconds to 10 minutes, in particular, preferably from 10 seconds to 5 minutes.

When the pressure-sensitive adhesive composition for the pressure-sensitive adhesive layer-carrying optical sheet of the invention contains a cationic photopolymerization initiator, an active energy ray is preferably applied to the pressure-sensitive adhesive layer formed on the release liner.

Examples of the light to be applied preferably include, but are not limited to, active energy rays such as ultraviolet light, visible light, and electron beam. The crosslinking process by ultraviolet irradiation can be performed using an appropriate ultraviolet light source such as a high-pressure mercury lamp, a low-pressure mercury lamp, an excimer laser, or a metal halide lamp. Generally, in this process, the ultraviolet exposure dose is preferably selected from the range of 0.2 to 10 J/cm², while it may be selected as appropriate depending on the desired degree of cross-linkage. The temperature during the irradiation is preferably, but not limited to, up to about 140°C in view of the heat resistance of the support. The quantity of light was indicated by an integrated quantity determined in UVA (320-390 nm), UVB (280-320 nm), UVC (250-260 nm), and UVV (395-445 nm) using UV Power Puck manufactured by Electronic Instrumentation and Technology Inc.

The pressure-sensitive adhesive layer irradiated with the active energy ray is bonded to the projection-and-recess pattern surface of the optical film so that the pressure-sensitive adhesive layer-carrying optical sheet of the invention is obtained.

The release liner having undergone the release treatment can also be used as a release liner for the pressure-sensitive adhesive layer-carrying optical sheet without modification, so that the process can be simplified.

When the active energy ray is applied, the cationic photopolymerization initiator is decomposed to produce an acid, so that a curing reaction of a cyclic ether group proceeds. Pot life is a characteristic of such cationic curing. If desired, the optical film can be bonded within 3 hours, more preferably within 30 minutes after the active energy ray is applied. When the optical film is bonded in such a manner, only the projections are bonded, and the curing reaction further proceeds, so that the remaining space of the projection-and-recess pattern surface is not filled with the pressure-sensitive adhesive layer any more. On the other hand, if the bonding is performed after more than 3 hours, the pressure-sensitive adhesive layer will be cured so that it cannot have a sufficient anchoring strength on the optical film in some cases. More preferably, the bonding is performed within 30 minutes to keep a sufficient anchoring strength on the optical film.

If more than 3 hours elapse after the active energy ray is applied, the surface of the optical film formed with projections and recesses may be subjected to a physical treatment such as a corona or plasma treatment or any of various undercoating treatments with a urethane resin, a silane coupling agent, or the like, and then the projection-and-recess pattern surface may be bonded to the pressure-sensitive adhesive layer, so that the pressure-sensitive adhesive layer-carrying optical sheet of the invention can be successfully obtained.

After such application of the active energy ray, the gel fraction will be from 70 to 98%, so that a pressure-sensitive adhesive layer with very high cohesive strength will be obtained. At 23°C, such a pressure-sensitive adhesive layer has a storage modulus of 10,000 to 1,000,000 Pa, preferably 3.0 x 10⁴ to 8.0 x 10⁵ Pa, more preferably 7.2 x 10⁴ to 6.1 x 10⁵ Pa and still possesses adherability.

As a result, when the release liner is peeled off, the pressure-sensitive adhesive layer-carrying optical sheet can be successfully bonded to various light sources or image display devices while it exhibits high tackiness or cohesive strength and high long-term durability.

On the other hand, when the heat-curing catalyst is used, a non-limiting preferred process includes performing a corona treatment, a plasma treatment, or the like on the projection-and-recess pattern surface of the optical film formed with projections and recesses, and then bonding the projection-and-recess pattern surface to the heat-treated pressure-sensitive adhesive layer. In this manner, the pressure-sensitive adhesive layer-carrying optical sheet of the invention is successfully obtained.

In this case, the gel fraction after the heat treatment will be from 70 to 98%, so that a pressure-sensitive adhesive layer with very high cohesive strength will be obtained. At 23°C, such a pressure-sensitive adhesive layer has a storage modulus of 10,000 to 1,000,000 Pa, preferably 3.0 x 10⁴ to 8.0 x 10⁵ Pa, more preferably 7.2 x 10⁴ to 6.1 x 10⁵ Pa and still possesses adherability.

Fig. 3 shows an exemplary embodiment in which the pressure-sensitive adhesive layer-carrying optical sheet of the invention is bonded to any type of light source or image display device. Specifically, first, the pressure-sensitive adhesive layer-carrying optical sheet according to an embodiment of the invention shown in Fig. 1 is used as it is, or the pressure-sensitive adhesive layer-carrying optical sheet to which a release liner 30 is attached according to another embodiment of the invention shown in Fig. 2 is used after the release liner 30 is peeled off, and then the pressure-sensitive adhesive layer is bonded to a light source or an image display device. Thus, as shown in Fig. 3, the pressure-sensitive adhesive layer is fixed on a light source 40 or an image display device 50.

While the pressure-sensitive adhesive layer may be provided with an intermediate layer or have a layered structure of two or more layers, the surface to be bonded to the projections of the optical film needs to be formed using the pressure-sensitive adhesive layer according to the invention. When an intermediate layer is used, a transparent plastic film is preferably used to form it. Such a transparent plastic film may be a 5-50 µm thick film of polyester, polycarbonate, triacetylcellulose, polynorbornene, or the like. In this case, the pressure-sensitive adhesive on the other surface of the intermediate layer, namely the surface to be bonded to a light source or an image display device, may be the pressure-sensitive adhesive according to the invention or produced using a composition containing a non-grafted polymer adhesive and a crosslinking agent. Such a pressure-sensitive adhesive may also be used on the other surface of a two-layer structure (the surface to be bonded to a light source or an image display device).

A significant effect can be observed using any light source such as a PDP fluorescent, LED fluorescent, organic EL, cold cathode fluorescent lamp, or laser light source. A method may include directly bonding the pressure-sensitive adhesive layer-carrying optical sheet to any of these light sources with the pressure-sensitive adhesive layer interposed therebetween. Alternatively, the pressure-sensitive adhesive layer-carrying optical sheet is preferably bonded to a glass or plastic substrate of a structure in which any of these light sources is incorporated, such as a backlight or light guide plate having a glass or acrylic plate surface for a liquid crystal television or a monitor, a light having an LED as a light source, or an organic EL light.

In conventional cases where a diffusion plate or any other optical sheet is provided on a backlight, the optical sheet is simply mounted on the upper part of the backlight, so that light loss occurs due to the presence of a thin air layer with a refractive index of 1.0 between the backlight and the optical sheet. However, when the pressure-sensitive adhesive layer-carrying optical sheet is attached with the pressure-sensitive adhesive layer, the loss is reduced, so that an advantageous effect is brought about in that light from the light source can be efficiently emitted without being confined to the inside. In addition, the effect of reducing variations in light-emission luminance, which are observed in FEDs, can also be expected. It is considered that in these effects, a diffused reflection effect is produced in the optical film, which enables uniform extraction of light.

On the other hand, the effect of increasing viewing angle can also be demonstrated when the invention is applied to an image display device such as a liquid crystal cell, a PDP display device, or an organic EL display device.

After easily bonded to a light source or an image display device, the pressure-sensitive adhesive layer-carrying optical sheet of the invention may encounter a problem such as capture of dust or misalignment. In such a case, the pressure-sensitive adhesive layer-carrying optical sheet of the invention is required to be reworked easily, and it is also required to maintain adhesion for a long time without dropping or peeling after it is bonded. Such an adhering strength may be 0.5 N/20 mm or more, preferably 0.7 N/20 mm or more, more preferably 1.5 N/20 mm or more, and 15 N/20 mm or less, preferably 12 N/20 mm or less, more preferably 9.0 N/20 mm or less, as measured by an evaluation (adhesion) method using a PET film as the adherend. Within the above range, dropping and peeling can be prevented, and good reworkability can be provided.

More preferably, an non-alkali glass is used as the adherend, and in such a case, the adhering strength after heating may be 3 N/25 mm or more, more preferably 3.5 N/25 mm or more, most preferably 4.0 N/25 mm or more, and 15 N/25 mm or less, more preferably 12 N/25 mm or less, most preferably 9.0 N/25 mm or less. Within the above range, dropping and peeling can be prevented, and good durability can be provided. In addition, there will be no adverse effect on the adherend if the sheet is removed due to staining or the like after long-term adhesion.

### EXAMPLES

Hereinafter, the invention is more specifically described with reference to the Examples, which however are not intended to limit the invention. In each example, "parts" and "%" are all by weight. Unless otherwise specified below, the conditions for allowing to stand at room temperature are 23°C and 65%RH in all cases.

### Example 1

### (Preparation of Acryl-Based Polymer Backbone)

To a four-neck flask equipped with a stirring blade, a thermometer, a nitrogen gas introducing tube, and a condenser were added 98 parts by weight of n-butyl acrylate, 2 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 55°C, so that a solution of an acryl-based polymer with a weight average molecular weight of 1,600,000 was obtained. The resulting acryl-based polymer had a glass transition temperature of 225 K.

### (Preparation of Graft Polymer)

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 3,4-epoxycyclohexylmethyl methacrylate, and 0.2 parts by weight of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

### (Formation of Pressure-Sensitive Adhesive Layer)

Subsequently, based on 100 parts by weight of the solids of the resulting graft polymer solution, 2 parts by weight of arylsulfonium hexafluorophosphate (ESACURE 1064, manufactured by Lamberti S.p.A.) was added to the graft polymer solution to form a pressure-sensitive adhesive solution.

The pressure-sensitive adhesive solution was applied to one side of a silicone release treated 38 µm thick polyethylene terephthalate (PET) film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1 J/cm² with a metal halide UV lamp. A film formed with hemispheric microlenses with a radius of 5 µm was prepared as an optical film by forming a 5 µm thick polystyrene layer on a 25 µm thick polyester film and hot pressing the polystyrene layer at 160°C. The irradiated pressure-sensitive adhesive layer was bonded to the projection-and-recess pattern surface of the optical film, so that a pressure-sensitive adhesive layer-carrying optical sheet of Example 1 was obtained.

### Example 2

### (Preparation of Acryl-Based Polymer Backbone)

To a four-neck flask equipped with a stirring blade, a thermometer, a nitrogen gas introducing tube, and a condenser were added 82 parts by weight of n-butyl acrylate, 15 parts by weight of methyl acrylate, 3 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,200,000 was obtained. The resulting acryl-based polymer had a glass transition temperature of 234 K.

### (Preparation of Graft Polymer)

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 30 parts by weight of 4-hydroxybutyl acrylate glycidyl ether, 30 parts by weight of isobornyl acrylate, and 0.12 parts by weight of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

### (Formation of Pressure-Sensitive Adhesive Layer)

Subsequently, based on 100 parts by weight of the solids of the resulting graft polymer solution, 0.3 parts by weight of a trimethylolpropane adduct of hexamethylenediisocyanate (CORONATE HL, manufactured by NIPPON POLYURETHANE INDUSTRY CO., LTD.) and 1 part by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate (PET) film (MRF-38, manufactured by Mitsubishi Plastics, Inc.) so that a 10 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1 J/cm² with a metal halide UV lamp. A film formed with hemispheric microlenses with a radius of 5 µm was prepared as an optical film by subjecting the surface of a 50 µm thick polystyrene film (1.59 in refractive index) to hot pressing at 160°C. The irradiated pressure-sensitive adhesive layer was bonded to the projection-and-recess pattern surface of the optical film, so that a pressure-sensitive adhesive layer-carrying optical sheet of Example 2 was obtained.

### Example 3

### (Preparation of Acryl-Based Polymer Backbone)

To a four-neck flask equipped with a stirring blade, a thermometer, a nitrogen gas introducing tube, and a condenser were added 98 parts by weight of n-butyl acrylate, 2 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,160,000 was obtained. The resulting acryl-based polymer had a glass transition temperature of 225 K.

### (Preparation of Graft Polymer)

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts by weight of 4-hydroxybutyl acrylate glycidyl ether, 20 parts by weight of isobornyl acrylate, and 0.12 parts by weight of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

### (Formation of Pressure-Sensitive Adhesive Layer)

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 1 part by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate (PET) film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 2 J/cm² with a metal halide UV lamp. The same optical film was prepared as in Example 1. The irradiated pressure-sensitive adhesive layer was bonded to the projection-and-recess pattern surface of the optical film, so that a pressure-sensitive adhesive layer-carrying optical sheet of Example 3 was obtained.

### Example 4

A pressure-sensitive adhesive layer-carrying optical sheet of Example 4 was obtained as in Example 3, except that an optical film formed with hemispheric microlenses with a radius of 5 µm was prepared by forming a 5 µm thick epoxy resin layer (1.59 in refractive index) on the surface of a 25 µm thick polyester film and hot pressing the epoxy resin layer at 160°C and then the projection-and-recess pattern surface of the optical film was bonded to the pressure-sensitive adhesive layer.

### Example 5

A pressure-sensitive adhesive layer-carrying optical sheet of Example 5 was obtained as in Example 3, except that an optical film with 5 µm radius hemispheric microlenses formed on both sides was prepared by forming 5 µm thick polystyrene layers on both sides of a 25 µm thick polyester film and hot pressing the polystyrene layers at 160°C, and then the projection-and-recess pattern surface of the optical film was bonded to the pressure-sensitive adhesive layer.

### Example 6

A pressure-sensitive adhesive layer-carrying optical sheet of Example 6 was obtained as in Example 3, except that the optical film used was a commercially-available diffusion film, and the projection-and-recess pattern surface of the optical film was bonded to the pressure-sensitive adhesive layer.

### Example 7

### (Preparation of Acryl-Based Polymer Backbone)

To a four-neck flask equipped with a stirring blade, a thermometer, a nitrogen gas introducing tube, and a condenser were added 88 parts by weight of n-butyl acrylate, 10 parts by weight of phenoxyethyl acrylate, 2 parts by weight of hydroxyethylacrylamide, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 55°C, so that a solution of an acryl-based polymer with a weight average molecular weight of 1,300,000 was obtained. The resulting acryl-based polymer had a glass transition temperature of 233 K.

### (Preparation of Graft Polymer)

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts by weight of 4-hydroxybutyl acrylate glycidyl ether, 20 parts by weight of 2-ethylhexyl acrylate, and 0.1 parts by weight of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

### (Formation of Pressure-Sensitive Adhesive Layer)

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 1 part by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate (PET) film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 2 J/cm² with a metal halide UV lamp. The same optical film was prepared as in Example 1. The irradiated pressure-sensitive adhesive layer was bonded to the projection-and-recess pattern surface of the optical film, so that a pressure-sensitive adhesive layer-carrying optical sheet of Example 7 was obtained.

### Example 8

### (Preparation of Acryl-Based Polymer Backbone)

To a four-neck flask equipped with a stirring blade, a thermometer, a nitrogen gas introducing tube, and a condenser were added 97 parts by weight of n-butyl acrylate, 3 parts by weight of 4-hydroxybutyl acrylate, 0.2 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,000,000 was obtained. The resulting acryl-based polymer had a glass transition temperature of 225 K.

### (Preparation of Graft Polymer)

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 10 parts by weight of 4-hydroxybutyl acrylate glycidyl ether, 10 parts by weight of 2-ethylhexyl acrylate, and 0.1 parts by weight of benzoyl peroxide. Nitrogen gas was introduced for 1 hour to replace the air, while the mixture was gently stirred. Subsequently, the temperature of the liquid in the flask was kept at about 60°C for 4 hours, and then at 70°C for 4 hours to proceed polymerization reaction, so that a graft polymer solution was obtained.

### (Formation of Pressure-Sensitive Adhesive Layer)

Subsequently, based on 100 parts by weight of the solids of the resulting graft polymer solution, 30 parts by weight of a styrene oligomer (SX-85, manufactured by YASUHARA CHEMICAL CO.,LTD, 82-85°C in softening point, 1,380 in weight average molecular weight, 1.60 in refractive index) as a tackifier, 0.3 parts by weight of a trimethylolpropane adduct of hexamethylenediisocyanate (CORONATE HL, manufactured by NIPPON POLYURETHANE INDUSTRY CO., LTD.), and 1 part by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate (PET) film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1 J/cm² with a metal halide UV lamp. The same optical film was prepared as in Example 1. The irradiated pressure-sensitive adhesive layer was bonded to the projection-and-recess pattern surface of the optical film, so that a pressure-sensitive adhesive layer-carrying optical sheet of Example 8 was obtained.

### Example 9

A pressure-sensitive adhesive layer-carrying optical sheet of Example 9 was obtained as in Example 3, except that after the UV irradiation, the sheet composed of the release liner and the pressure-sensitive adhesive layer provided thereon was allowed to stand at room temperature for 3 hours, and then bonded to the optical film.

### Example 10

The same optical film was prepared as in Example 1, and the projection-and-recess pattern surface was corona-treated (260 W/m²/minute in discharge magnitude). A pressure-sensitive adhesive layer-carrying optical sheet of Example 10 was obtained as in Example 9, except that after the UV irradiation, the sheet composed of the release liner and the pressure-sensitive adhesive layer provided thereon was allowed to stand at room temperature for 3 hours, and then bonded to the optical film.

### Example 11

Based on 100 parts by weight of the solids of the graft polymer solution obtained in Example 3, 0.2 parts by weight of a trimethylolpropane adduct of hexamethylenediisocyanate (CORONATE HL, manufactured by NIPPON POLYURETHANE INDUSTRY CO., LTD.) and 2.0 parts by weight of 2-phenylimidazole as a heat-curing catalyst were added to the graft polymer solution to form a pressure-sensitive adhesive solution.

The pressure-sensitive adhesive solution was applied to a silicone release treated 38 µm thick polyethylene terephthalate (PET) film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was treated at 160°C for 3 minutes. The same optical film was prepared as in Example 1, and the projection-and-recess pattern surface was corona-treated (260 W/m²/minute in discharge magnitude). The heat-treated pressure-sensitive adhesive layer was bonded to the projection-and-recess pattern surface of the optical film, so that a pressure-sensitive adhesive layer-carrying optical sheet of Example 11 was obtained.

### Example 12

Based on 100 parts by weight of the solids of the acryl-based polymer solution obtained in Example 3 before the grafting process, 0.5 parts by weight of a trimethylolpropane adduct of hexamethylenediisocyanate (CORONATE HL, manufactured by NIPPON POLYURETHANE INDUSTRY CO., LTD.), 15 parts by weight of an alicyclic epoxy resin (EP4005, manufactured by ADEKA CORPORATION) as an epoxy resin, and 1 part by weight of arylsulfonium hexafluorophosphate (ESACURE 1064, manufactured by Lamberti S.p.A.) were added to the polymer solution to form a pressure-sensitive adhesive solution.

The pressure-sensitive adhesive solution was applied to a silicone release treated 38 µm thick polyethylene terephthalate (PET) film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1 J/cm² with a metal halide UV lamp. The same optical film was prepared as in Example 1, and the projection-and-recess pattern surface was corona-treated (260 W/m²/minute in discharge magnitude). The irradiated pressure-sensitive adhesive layer was bonded to the projection-and-recess pattern surface of the optical film, so that a pressure-sensitive adhesive layer-carrying optical sheet of Example 12 was obtained.

### Comparative Example 1

A pressure-sensitive adhesive layer-carrying optical sheet of Comparative Example 1 was obtained by performing the same process as in Example 3, except that a solution of an acryl-based polymer with a weight average molecular weight of 1,160,000 was prepared from 98 parts by weight of n-butyl acrylate and 2 parts by weight of 4-hydroxybutyl acrylate, to which the crosslinking agent and the cationic photopolymerization initiator were added without performing the graft polymerization process. The recesses of the projection-and-recess pattern surface were entirely filled with the pressure-sensitive adhesive.

### Comparative Example 2

A pressure-sensitive adhesive layer-carrying optical sheet of Comparative Example 2 was obtained as in Example 3, except that the optical film was bonded without performing the UV irradiation. The recesses of the projection-and-recess pattern surface were entirely filled with the pressure-sensitive adhesive.

### Comparative Example 3

The original three plates: a diffusion plate, a BEF, and a diffusion plate were placed on the backlight as they were, with no pressure-sensitive adhesive layer-carrying optical sheet bonded to the light source, when the luminance was evaluated.

### Example 13

To a four-neck flask equipped with a stirring blade, a thermometer, a nitrogen gas introducing tube, and a condenser were added 97 parts by weight of n-butyl acrylate, 3 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,160,000 was obtained. The resulting acryl-based polymer had a glass transition temperature of 225 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 0.5 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with hemispheric microlenses with a radius of 5 µm, which was prepared by subjecting the surface of a 50 µm thick polystyrene film (1.59 in refractive index) to hot pressing at 160°C, so that a pressure-sensitive adhesive layer-carrying optical sheet of Example 1 was obtained.

### Example 14

To a four-neck flask equipped with a stirring blade, a thermometer, a nitrogen gas introducing tube, and a condenser were added 97 parts by weight of n-butyl acrylate, 3 parts by weight of 4-hydroxyethylacrylamide (HEAA), 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,200,000 was obtained. The resulting acryl-based polymer had a glass transition temperature of 234 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 0.5 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured be Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with hemispheric microlenses with a radius of 5 µm, which was prepared by subjecting the surface of a 50 µm thick polystyrene film (1.59 in refractive index) to hot pressing at 160°C, so that a pressure-sensitive adhesive layer-carrying optical sheet of Example 2 was obtained.

### Example 15

To a four-neck flask equipped with a stirring blade, a thermometer, a nitrogen gas introducing tube, and a condenser were added 97 parts by weight of n-butyl acrylate, 3 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,160,000 was obtained. The resulting acryl-based polymer had a glass transition temperature of 225 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 1 part by weight of arylsulfonlum hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with microlenses, which was prepared as in Example 1, so that a pressure-sensitive adhesive layer-carrying optical sheet of Example 3 was obtained.

### Example 16

To a four-neck flask equipped with a stirring blade, a thermometer, a nitrogen gas introducing tube, and a condenser were added 97 parts by weight of n-butyl acrylate, 3 parts by weight of HEAA, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,200,000 was obtained. The resulting acryl-based polymer had a glass transition temperature of 234 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 1.0 part by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 10 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with hemispheric microlenses with a radius of 5 µm, which was prepared by subjecting the surface of a 50 µm thick polystyrene film (1.59 in refractive index) to hot pressing at 160°C, so that a pressure-sensitive adhesive layer-carrying optical sheet of Example 4 was obtained.

### Example 17

To a four-neck flask equipped with a stirring blade, a thermometer, a nitrogen gas introducing tube, and a condenser were added 97 parts by weight of n-butyl acrylate, 3 parts by weight of HEAA, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,200,000 was obtained. The resulting acryl-based polymer had a glass transition temperature of 234 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 0.3 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with hemispheric microlenses with a radius of 5 µm, which was prepared by subjecting the surface of a 50 µm thick polystyrene film (1.59 in refractive index) to hot pressing at 160°C, so that a pressure-sensitive adhesive layer-carrying optical sheet of Example 5 was obtained.

### Example 18

To a four-neck flask equipped with a stirring blade, a thermometer, a nitrogen gas introducing tube, and a condenser were added 97 parts by weight of n-butyl acrylate, 3 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,160,000 was obtained. The resulting acryl-based polymer had a glass transition temperature of 225 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 0.3 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with microlenses, which was prepared as in Example 1, so that a pressure-sensitive adhesive layer-carrying optical sheet of Example 6 was obtained.

### Example 19

To a four-neck flask equipped with a stirring blade, a thermometer, a nitrogen gas introducing tube, and a condenser were added 97 parts by weight of n-butyl acrylate, 3 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,160,000 was obtained. The resulting acryl-based polymer had a glass transition temperature of 225 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 1.2 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with microlenses, which was prepared as in Example 1, so that a pressure-sensitive adhesive layer-carrying optical sheet of Example 7 was obtained.

### Example 20

To a four-neck flask equipped with a stirring blade, a thermometer, a nitrogen gas introducing tube, and a condenser were added 97 parts by weight of n-butyl acrylate, 3 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,160,000 was obtained. The resulting acryl-based polymer had a glass transition temperature of 225 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 20 parts of 4-hydroxybutyl acrylate glycidyl ether, 20 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 1.5 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with microlenses, which was prepared as in Example 1, so that a pressure-sensitive adhesive layer-carrying optical sheet of Example 8 was obtained.

### Example 21

To a four-neck flask equipped with a stirring blade, a thermometer, a nitrogen gas introducing tube, and a condenser were added 97 parts by weight of n-butyl acrylate, 3 parts by weight of HEAA, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,200,000 was obtained. The resulting acryl-based polymer had a glass transition temperature of 234 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 30 parts of 4-hydroxybutyl acrylate glycidyl ether, 30 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 0.35 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 10 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with hemispheric microlenses with a radius of 5 µm, which was prepared by subjecting the surface of a 50 µm thick polystyrene film (1.59 in refractive index) to hot pressing at 160°C, so that a pressure-sensitive adhesive layer-carrying optical sheet of Example 9 was obtained.

### Example 22

To a four-neck flask equipped with a stirring blade, a thermometer, a nitrogen gas introducing tube, and a condenser were added 97 parts by weight of n-butyl acrylate, 3 parts by weight of HEAA, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,200,000 was obtained. The resulting acryl-based polymer had a glass transition temperature of 234 K.

The resulting acryl-based polymer solution was diluted with ethyl acetate to a solids content of 25%, so that a dilute solution (I) was obtained. To a four-neck flask equipped with a stirring blade, a thermometer, a nitrogen gas introducing tube, and a condenser were added 400 parts by weight of the dilute solution (I), 30 parts of 4-hydroxybutyl acrylate glycidyl ether, 30 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.2 parts by weight of a trimethylolpropane adduct of hexamethylenediisocyanate (CORONATE HL, manufactured by NIPPON POLYURETHANE INDUSTRY CO., LTD.) and 0.30 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 10 µm thick pressure-sensitive adhesive layer could be formed after drying, and dried at 120°C for 3 minutes.

Subsequently, the sheet composed of the release liner and the pressure-sensitive adhesive layer provided thereon was irradiated at 1.5 J/cm² with a metal halide UV lamp, and then bonded to the projection-and-recess pattern surface of an optical film formed with hemispheric microlenses with a radius of 5 µm, which was prepared by subjecting the surface of a 50 µm thick polystyrene film (1.59 in refractive index) to hot pressing at 160°C, so that a pressure-sensitive adhesive layer-carrying optical sheet of Example 10 was obtained.

### Comparative Example 4

A pressure-sensitive adhesive layer-carrying optical sheet of Comparative Example 1 was obtained by performing the same process as in Example 4, except that a solution of an acryl-based polymer with a weight average molecular weight of 1,160,000 was prepared from 97 parts by weight of n-butyl acrylate and 3 parts by weight of HEAA, to which only the crosslinking agent was added without performing the graft polymerization process.

### Comparative Example 5

A pressure-sensitive adhesive layer-carrying optical sheet of Comparative Example 2 was obtained as in Example 1, except that the optical sheet was bonded without performing the UV irradiation.

### Comparative Example 6

The luminance of a commercially available OLED with the original light source, to which no pressure-sensitive adhesive layer-carrying optical sheet was bonded, was evaluated.

### Comparative Example 7

To a four-neck flask equipped with a stirring blade, a thermometer, a nitrogen gas introducing tube, and a condenser were added 97 parts by weight of n-butyl acrylate, 4 parts by weight of 4-hydroxybutyl acrylate, 0.1 parts by weight of 2,2'-azobisisobutyronitrile as a polymerization initiator, and 200 parts by weight of ethyl acetate. Nitrogen gas was introduced for 1 hour to replace the air, while the mixture was gently stirred, and then a polymerization reaction was performed for 10 hours, while the temperature of the liquid in the flask was kept at about 60°C, so that a solution of an acryl-based polymer with a weight average molecular weight of 1,160,000 was obtained. The resulting acryl-based polymer had a glass transition temperature of 225 K.

The resulting acryl-based polymer solution was diluted with ethyl acetate to a solids content of 30%, so that a dilute solution (I) was obtained. To a four-neck flask equipped with a stirring blade, a thermometer, a nitrogen gas introducing tube, and a condenser were added 400 parts by weight of the dilute solution (I), 30 parts of 4-hydroxybutyl acrylate glycidyl ether, 25 parts of isobornyl acrylate, and 0.12 parts of benzoyl peroxide. Nitrogen gas was introduced for 1 hour to replace the air, while the mixture was gently stirred. Subsequently, the temperature of the liquid in the flask was kept at about 65°C for 4 hours, and then at 70°C for 4 hours to proceed polymerization reaction, so that a graft polymer solution was obtained.

Subsequently, based on 100 parts by weight of the solids of the resulting graft polymer solution, 0.4 parts by weight of a trimethylolpropane adduct of hexamethylenediisocyanate (CORONATE HL, manufactured by NIPPON POLYURETHANE INDUSTRY CO., LTD.) and 2.0 parts by weight of arylsulfonium hexafluorophosphate (ESACURE 1064, manufactured by Lamberti S.p.A.) were added to the graft polymer solution to form a pressure-sensitive adhesive solution.

The pressure-sensitive adhesive solution was applied to a silicone release treated 38 µm thick polyethylene terephthalate film (MRF-38, manufactured by Mitsubishi Plastics, Inc.) so that a 20 µm thick pressure-sensitive adhesive layer could be formed after drying, and dried at 120°C for 3 minutes.

Subsequently, the sheet composed of the release liner and the pressure-sensitive adhesive layer provided thereon was irradiated at 4 J/cm² with a metal halide UV lamp, then stored at room temperature for 24 hours, and then bonded to the projection-and-recess pattern surface of an optical film formed with hemispheric microlenses with a radius of 5 µm, which was prepared by subjecting the surface of a 50 µm thick polystyrene film (1.59 in refractive index) to hot pressing at 160°C, so that a pressure-sensitive adhesive layer-carrying optical sheet of Comparative Example 4 was obtained.

The pressure-sensitive adhesive layer-carrying optical sheets obtained in the examples and the comparative examples were evaluated.

### <Measurement of Weight Average Molecular Weight>

The weight average molecular weight of the resulting (meth)acryl-based polymer was measured by GPC (gel permeation chromatography). The sample was dissolved in dimethylformamide to form a 0.1% by weight solution. The solution was allowed to stand overnight and then filtered through a 0.45 µm membrane filter. The resulting filtrate was used in the measurement.
Analyzer: HLC-8120GPC, manufactured by TOSOH CORPORATION
Columns: G7000H_{XL}+GMH_{XL}+GMH_{XL} manufactured by TOSOH CORPORATION
Columns for low-molecular-weight products: GM_{HR}-H+GMH_{HR}+G2000MH_{HR}
Column size: each 7.8 mmϕ x 30 cm, 90 cm in total
Eluent: tetrahydrofuran (a concentration of 0.1% by weight)
Flow rate: 0.8 ml/minute
Detector: differential refractometer (RI)
Column temperature: 40°C
Injection volume: 100 µl
Standard sample: polystyrene
Data processor: GPC-8020, manufactured by TOSOH CORPORATION

### <Measurement of Gel Fraction>

The dried and crosslinked pressure-sensitive adhesive (with an initial weight W1) was immersed and stored in an ethyl acetate solution at room temperature for 1 week. The insoluble matter was then taken out and measured for dry weight (W2). The gel fraction was determined according to the following formula: gel fraction = (W2/W1) x 100.

### <Method for Measuring Dynamic Viscoelasticity>

Instrument: ARES manufactured by TA Instruments Inc.
Deformation mode: twisting
Measurement frequency: constant frequency, 1 Hz
Rate of temperature increase: 5°C/minute
Measurement temperature: from around the glass transition temperature of the pressure-sensitive adhesive to 160°C
Geometry: parallel plates, 8.0 mmϕ
Sample thickness: 0.5-2 mm (initial stage of attachment)
The storage modulus (G') was read at 23°C.

### <Adhering Strength>

The release liner was peeled off from a 20 mm wide piece of the pressure-sensitive adhesive layer-carrying optical sheet obtained in each of the examples and the comparative examples. The optical sheet was then bonded to a PET film by one reciprocation of a 2 kg roller. The laminate was autoclaved at 50°C and 0.5 MPa for 30 minutes and then allowed to stand under 60°C conditions for 17 hours. Subsequently, the peel strength (N/25 mm) of the optical sheet was measured at a peel angle of 180° and a peel rate of 300 mm/minute.

### <Microlens Space Filling Rate>

The cross-section of the part where the microlenses were bonded to the pressure-sensitive adhesive was observed with an FE-SEM (S-4800, Hitachi, Ltd.) at a magnification of 5,000 times, and the microlens space filling rate was determined from the observed image according to the equation: (microlens space filling rate)=(embedded height (h)/microlens height (H)) x 100 (Fig. 1).

### <Durability>

The durability in Table 1 was evaluated as described below. The release liner was peeled off from a 200 mm x 200 mm piece of the pressure-sensitive adhesive layer-carrying optical sheet obtained in each of the examples and the comparative examples. The optical sheet was then bonded to a non-alkali glass plate by one reciprocation of a 2 kg roller. The laminate was autoclaved at 50°C and 0.5 MPa for 30 minutes and then stored at 60°C and a humidity of 90%. After 500 hours, the case where neither lifting nor peeling occurred was expressed by the mark "O, " and the case where lifting or peeling occurred was expressed by the mark "X".

The durability in Table 2 was evaluated as described below. The release liner was peeled off from a 200 mm x 200 mm piece of the pressure-sensitive adhesive layer-carrying optical sheet obtained in each of the examples and the comparative examples. The optical sheet was then bonded to a non-alkali glass plate by one reciprocation of a 2 kg roller. The laminate was autoclaved at 50°C and 0.5 MPa for 30 minutes and then stored at 60°C and a humidity of 90%. After 100 hours, the case where neither lifting nor peeling occurred was expressed by the mark "O," and the case where lifting or peeling occurred was expressed by the mark "X".

### <Luminance>

The luminance in Table 1 was evaluated as described below. The pressure-sensitive adhesive layer-carrying optical sheet of the invention was bonded onto the light guide plate of the backlight of a 17 inch color display (SyncMaster 712N) manufactured by Samsung Electronics Co., Ltd. to form a light source structure according to the invention including the adherend to emit light, the pressure-sensitive adhesive layer, and the optical film formed with projections and recesses and having the projection-and-recess pattern surface placed on the pressure-sensitive adhesive layer side, which were stacked in this order. The original three plates of the display, a diffusion plate, a BEF, and a diffusion plate were further stacked as they were. A luminance meter Bm-9 manufactured by TOPCON CORPORATION was used with the distance between the light source and the luminance meter set to 350 mm. The luminance meter was aligned to the center of the light source, which was shielded except for a 20 mm square part, and the luminance (cd/cm²) was measured in a darkroom. The luminance in Table 2 was evaluated as described below. The pressure-sensitive adhesive layer-carrying optical sheet of the invention was bonded onto the OLED emission layer of Technology Kid "Lumi Blade" manufactured by Royal Philips Electronics to form a light source structure according to the invention including the adherend to emit light, the pressure-sensitive adhesive layer, and the optical film formed with projections and recesses whose surface area increased as it went to the opposite side, which were stacked in this order. The luminance was measured in all directions (0-80°) using a luminance meter CONOSCOPE 80 manufactured by AUTRONIC-MELCHERS GmbH. in a darkroom, and the luminance (cd/m²) in the normal direction and that in the direction at a polar angle of 50° were read.

### <Refractive Index>

The refractive index was measured with an Abbe refractometer (DR-M2 manufactured by ATAGO CO., LTD.) in a 25°C atmosphere while sodium D line was applied.

### <Anchoring Strength>

The release liner was peeled off from a 25 mm wide piece of the pressure-sensitive adhesive layer-carrying optical sheet obtained in each of the examples and the comparative examples. The surface of a 38 µm thick polyester film (LUMIRROR S-10, manufactured by TORAY INDUSTRIES, INC.) was corona-treated (discharge magnitude: 150 W/m²/minute) and then bonded to the surface of the pressure-sensitive adhesive layer by one reciprocation of a 2 kg roller. The laminate was autoclaved at 50°C and 0.5 MPa for 30 minutes and then allowed to stand under the conditions of 23°C and a humidity of 50% for 24 hours. Subsequently, the peel strength (the strength when destruction by anchor occurred) between the pressure-sensitive adhesive layer and the projection-and-recess pattern surface of the optical film was measured at a peel angle of 180° and a peel rate of 300 mm/minute.

The results of each evaluation are shown in Tables 1 and 2.

**[Table 1]**

| | Gel fraction | Refractive index | Storage modulus | Adhering strength | Adhering strength after heating | Durability | Luminance | Anchoring strength |
|---|---|---|---|---|---|---|---|---|
| Example 1 | 87.5 | 1.475 | 61500 | 6.2 | 6.6 | ○ | 775 | 7.3 |
| Example 2 | 93.5 | 1.481 | 148000 | 3.8 | 4 | ○ | 791 | 5.6 |
| Example 3 | 92.4 | 1.476 | 62000 | 5 | 5.3 | ○ | 785 | 7.0 |
| Example 4 | 92.4 | 1.476 | 62000 | 5.3 | 5.5 | ○ | 770 | 8.8 |
| Example 5 | 92.4 | 1.476 | 62000 | 5.5 | 5.9 | ○ | 820 | 7.1 |
| Example 6 | 92.4 | 1.476 | 62000 | 3.9 | 4.3 | ○ | 630 | 4.8 |
| Example 7 | 91.8 | 1.49 | 78200 | 5.8 | 6.2 | ○ | 800 | 7.7 |
| Example 8 | 74.5 | 1.508 | 38200 | 6.3 | 6.8 | ○ | 833 | 8.2 |
| Example 9 | 92.8 | 1.476 | 62000 | 1.8* | 1.9* | × | 690 | 1.1 |
| Example 10 | 92.4 | 1.476 | 62000 | 5.0 | 5.3 | ○ | 785 | 6.1 |
| Example 11 | 90.2 | 1.476 | 59000 | 6.5 | 6.8 | ○ | 780 | 8.8 |
| Example 12 | 91.4 | 1.477 | 61000 | 6.1 | 6.3 | ○ | 784 | 9.0 |
| Comparative Example 1 | 67.4 | 1.464 | 27500 | 10 | 10.5 | ○ | 460 | 13.2 |
| Comparative Example 2 | 64.3 | 1.476 | 28200 | 7.6 | 8.7 | ○ | 480 | 12.1 |
| Comparative Example 3 | - | | - | - | - | - | 469 | - |

**[Table 2]**

| | Storage modulus | Microlens space filling rate | Adhering strength | Durability | Normal direction luminance | Oblique luminance (polar angle 50°) | Gel fraction (%) |
|---|---|---|---|---|---|---|---|
| Example 13 | 103000 | 23% | 4.1 | ○ | 2032 | 2055 | 86 |
| Example 14 | 83300 | 40% | 8.0 | ○ | 1935 | 1970 | 83 |
| Example 15 | 105000 | 20% | 2.0 | ○ | 2061 | 2085 | 89 |
| Example 16 | 85200 | 35% | 4.7 | ○ | 1970 | 2002 | 88 |
| Example 17 | 82400 | 50% | 8.5 | ○ | 1936 | 1970 | 81 |
| Example 18 | 98000 | 27% | 7.3 | ○ | 2008 | 2040 | 84 |
| Example 19 | 110000 | 15% | 1.5 | ○ | 2050 | 2065 | 91 |
| Example 20 | 115000 | 10% | 0.9 | ○ | 2058 | 2068 | 92 |
| Example 21 | 81000 | 65% | 9.3 | ○ | 1948 | 1980 | 80 |
| Example 22 | 79000 | 75% | 9.8 | ○ | 1925 | 1935 | 78 |
| Comparative Example 4 | 59312 | 100% | 10.5 | ○ | 1585 | 1758 | 58 |
| Comparative Example 5 | 71200 | 100% | 11.5 | ○ | 1595 | 1785 | 75 |
| Comparative Example 6 | - | - | - | - | 1321 | 1242 | - |
| Comparative Example 7 | 611200 | 4% | 0.2 | × | 2060 | 2090 | 95 |

In the table, the mark * means that destruction by anchor occurred or the pressure-sensitive adhesive layer remained on the glass plate.

### DESCRIPTION OF REFERENCE CHARACTERS

Reference numeral 1 represents embedded height (h), 2 microlens height (H), 10 an optical film, 20 a pressure-sensitive adhesive layer, 30 a release liner, 40 a light source, and 50 an image display device.

## Claims

1. A pressure-sensitive adhesive layer-carrying optical sheet, comprising:
an optical film formed with projections and recesses; and
a pressure-sensitive adhesive layer placed on a projection-and-recess pattern surface of the optical film, wherein
the pressure-sensitive adhesive layer is fixed on part of each projection of the optical film formed with projections and recesses.

2. The pressure-sensitive adhesive layer-carrying optical sheet according to claim 1, further comprising a release liner.

3. The pressure-sensitive adhesive layer-carrying optical sheet according to claim 1 or 2, wherein the projections of the optical film are partially embedded in the pressure-sensitive adhesive layer over 5% to 90% of their height.

4. The pressure-sensitive adhesive layer-carrying optical sheet according to any one of claims 1 to 3, wherein the optical film comprises a plurality of layers.

5. The pressure-sensitive adhesive layer-carrying optical sheet according to any one of claims 1 to 4, wherein the pressure-sensitive adhesive layer has a gel fraction of 70 to 98%.

6. The pressure-sensitive adhesive layer-carrying optical sheet according to any one of claims 1 to 5, wherein the pressure-sensitive adhesive layer has a refractive index of 1.460 or more.

7. The pressure-sensitive adhesive layer-carrying optical sheet according to any one of claims 1 to 6, wherein the pressure-sensitive adhesive layer has a storage modulus of 10,000 to 1,000,000 Pa at 23°C.

8. The pressure-sensitive adhesive layer-carrying optical sheet according to any one of claims 1 to 7, which has a 180° peel strength of 0.5 N or more between the pressure-sensitive adhesive layer and the optical film.

9. The pressure-sensitive adhesive layer-carrying optical sheet according to any one of claims 1 to 8, wherein the optical film is a microlens, a prism sheet, or a light diffusion plate.

10. The pressure-sensitive adhesive layer-carrying optical sheet according to any one of claims 1 to 9, wherein the pressure-sensitive adhesive layer has a thickness of 1 to 100 µm.

11. The pressure-sensitive adhesive layer-carrying optical sheet according to any one of claims 1 to 10, wherein the pressure-sensitive adhesive layer is prepared from a pressure-sensitive adhesive composition comprising a (meth)acryl-based polymer as a main component.

12. The pressure-sensitive adhesive layer-carrying optical sheet according to claim 11, wherein the pressure-sensitive adhesive layer is prepared from a curable pressure-sensitive adhesive composition containing a (meth)acryl-based polymer and one or a combination of two or more selected from the group consisting of an isocyanate crosslinking agent, an epoxy resin, a cationic photopolymerization initiator, and a heat-curing catalyst.

13. The pressure-sensitive adhesive layer-carrying optical sheet according to claim 11 or 12, wherein the (meth)acryl-based polymer is a graft polymer comprising a (meth)acryl-based polymer backbone and a chain that contains a cyclic ether group-containing monomer component and is grafted onto the backbone.

14. The pressure-sensitive adhesive layer-carrying optical sheet according to claim 13, wherein the graft polymer is a product obtained by graft polymerization of 2 to 50 parts by weight of the cyclic ether group-containing monomer onto 100 parts by weight of the (meth)acryl-based polymer backbone in the presence of 0.02 to 5 parts by weight of a peroxide.

15. The pressure-sensitive adhesive layer-carrying optical sheet according to claim 14, wherein the graft polymer is a product obtained by graft polymerization of 2 to 50 parts by weight of the cyclic ether group-containing monomer and 5 to 50 parts by weight of any other monomer onto 100 parts by weight of the (meth)acryl-based polymer backbone in the presence of 0.02 to 5 parts by weight of a peroxide.

16. The pressure-sensitive adhesive layer-carrying optical sheet according to any one of claims 13 to 15, wherein the pressure-sensitive adhesive layer is prepared from a pressure-sensitive adhesive composition containing:
a graft polymer comprising a (meth)acryl-based polymer backbone and a chain that contains a cyclic ether group-containing monomer component and is grafted onto the backbone; and a cationic photopolymerization initiator or a heat-curing catalyst.

17. The pressure-sensitive adhesive layer-carrying optical sheet according to any one of claims 13 to 16, wherein the pressure-sensitive adhesive composition contains 0.01 parts by weight to 20 parts by weight of an isocyanate crosslinking agent based on 100 parts by weight of the (meth)acryl-based polymer backbone.

18. The pressure-sensitive adhesive layer-carrying optical sheet according to any one of claims 13 to 17, wherein the pressure-sensitive adhesive composition contains 0.01 parts by weight to 20 parts by weight of a silane coupling agent based on 100 parts by weight of the (meth)acryl-based polymer backbone.

19. A method for producing the pressure-sensitive adhesive layer-carrying optical sheet according to any one of claims 1 to 18, comprising the step of bonding a pressure-sensitive adhesive layer to part of projections of an optical film formed with projections and recesses, wherein the pressure-sensitive adhesive layer is applied to a release liner.

20. A method for producing the pressure-sensitive adhesive layer-carrying optical sheet according to any one of claims 16 to 18, comprising the steps of:
applying an active energy ray to a pressure-sensitive adhesive layer applied to a release liner, wherein the pressure-sensitive adhesive composition contains a cationic photopolymerization initiator; and
bonding the treated pressure-sensitive adhesive layer to part of projections of an optical film formed with projections and recesses.

21. An optical film-carrying light source, comprising:
a light source; and
the pressure-sensitive adhesive layer-carrying optical sheet according to any one of claims 1 to 18, of which the pressure-sensitive adhesive layer is bonded to the light source.

22. An optical film-carrying image display device, comprising:
an image display device; and
the pressure-sensitive adhesive layer-carrying optical sheet according to any one of claims 1 to 18, of which the pressure-sensitive adhesive layer is bonded to the image display device.
